# EUROPÄISCHE PATENTSCHRIFT

(11) **EP 4 461 628 B1**
(45) Veröffentlichungstag und Bekanntmachung des Hinweises auf die Patenterteilung: **28.01.2026**
(21) Anmeldenummer: 24175217.9
(22) Anmeldetag: 10.05.2024
(51) Int. Cl.: B60B 33/06, B60G 11/22, B62D 61/10, B60G 3/02, B62D 7/02, B62D 7/15, B62D 63/02

(54) **TRANSPORTFAHRZEUG**
TRANSPORT VEHICLE
VÉHICULE DE TRANSPORT

(30) Priorität: 12.05.2023 CH 5082023
(43) Veröffentlichungstag der Anmeldung: 13.11.2024
(73) Patentinhaber: Wagner, Philipp, 7310 Bad Ragaz (CH)
(72) Erfinder: Wagner, Philipp, 7310 Bad Ragaz (CH); Garbald, Hans-Peter, 7250 Klosters (CH)
(74) Vertreter: Swisspat Riederer Hasler Patentanwälte AG

(56) Entgegenhaltungen:
- CN-A- 108 973 569
- CN-B- 111 730 609
- CN-U- 208 149 475
- US-A1- 2003 196 840
- US-B1- 11 130 519

## Beschreibung

### Gebiet der Erfindung

Die Erfindung betrifft ein Transportmodul zum Transport eines Gegenstandes, insbesondere in einer Produktionslinie einer technischen Anlage.

### Stand der Technik

Aus dem Stand der Technik sind Transportsysteme bekannt, welche Gegenstände in einer technischen Anlage fortbewegen.

Ist ein Transportsystem schienengebunden so kann es niedrig bauen, da der Durchmesser der lasttragenden Räder gering ist und besitzt eine hohe Nutzlast von bis zu 100t. Allerdings ist das das Transportsystem zwangsläufig durch die Schienen spurgebunden und eine Änderung des Transportweges nach Verlegung der Schienen ist unmöglich.

Ein nicht spurgebundenes Transportsystem ist in der horizontalen Bewegungsrichtung des Gegenstandes flexibel. Ein solches Transportsystem benötigt Antriebsräder, die mit einem weichen Laufbelag für eine ausreichende Traktion auf dem Untergrund ausgestattet sind, damit die Antriebsräder nicht durchdrehen. Der Laufbelag ist in seiner Belastung begrenzt und dementsprechend ist die Nutzlast des Transportsystems gering. Zudem müssen die Räder einen der Nutzlast entsprechenden Durchmesser aufweisen, der mit steigender Nutzlast überproportional zunimmt. Daraus folgend baut ein solches Transportsystem hoch und Arbeiten an dem Gegenstand bzw. die Zugänglichkeit zu dem Gegenstand sind während des Transportes erschwert bzw. unmöglich.

Bekannte Alternativen, die z. B. auf dem Effekt des Luftkissens beruhen, setzen einen sehr ebenen Untergrund voraus, haben einen hohen Energieverbrauch und sind deshalb für einen regelmässigen Gebrauch, z. B. in der Produktionstechnik, ungeeignet.

Ein solches Transportsystem mit Transportmodulen gemäß der Präambel von Anspruch 1 ist beispielsweise durch die US 11 130 519 B1 bekannt.

### Aufgabe der Erfindung

Aus den Nachteilen des beschriebenen Stands der Technik resultiert die Aufgabe ein Transportsystem zu schaffen, welches die Vorteile eines schienengebunden Transportsystems mit denen eines nicht spurgebunden Transportsystems vereint.

### Beschreibung

Die Lösung der gestellten Aufgabe gelingt bei einem Transportmodul zum Transport eines Gegenstandes, insbesondere in einer Produktionslinie einer technischen Anlage durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich bevorzugt dadurch aus, dass das Transportmodul mit einem Tragelement derart mit dem zu transportierenden Gegenstand verbindbar ist, dass es um eine zweite vertikale Drehachse drehbar ist, und dass das wenigstens eine Antriebsrad mit einer Radaufhängung an dem Support befestigt ist, wobei durch die Radaufhängung die Last zwischen den Lenkrollen und dem wenigstens einen Antriebsrad verteilbar ist und auf bis zu 100% auf die Lenkrollen übertragen werden kann. Bei der vorliegenden Erfindung sind die Kernfunktionen Last aufnehmen, Last tragen und Last bewegen in für sich eigenständige Komponenten separiert. Die Funktion Last tragen wird durch die Komponenten Lenkrolle, die Funktion Last bewegen wird durch Komponente Antriebsrad und die Funktion Last aufnehmen wird durch die Komponente Tragelement erfüllt. Alle Komponenten werden über den Support in das Transportmodul integriert. Diese Übernahme der Funktionen durch einzelne Komponenten führt dazu, dass das Transportmodul im Vergleich zum Stand der Technik bei gleicher Nutzlast deutlich niedriger baut und erlaubt es, an den zu transportierenden Gegenständen Arbeiten, wie beispielsweise die Endmontage oder Inbetriebnahme, auszuführen, während diese Gegenstände sich auf einem solchen Transportsystem befinden. Ein weiterer Vorteil ist die geringe Auswirkung infolge Störung, dadurch gewährleistet, dass jedes der Transportmodule einzeln oder der zu transportierende Gegenstand mitsamt störungsbehaftetem Transportsystem manuell verschoben werden kann.

Das Transportmodul ist daher ein gleichwertiger Ersatz resp. gleichwertige Alternative zu spurgebundenen Lösungen, beispielsweise in der Endmontage und Inbetriebnahme von schweren Werkzeugmaschinen, und erfüllt weit darüberhinausgehende Anforderungen an Flexibilität und Anpassbarkeit.

In einer weiteren besonders bevorzugten Ausführungsform der Erfindung ist das Transportmodul dafür vorgesehen, mit wenigstens einem weiteren Transport- oder einem antriebslosen Lastmodul ein Transportsystem zu bilden und gemeinsam mit dem weiteren Transport- oder Lastmodul den Gegenstand transportieren zu können. Dadurch lässt sich rasch ein statisch bestimmtes Transportsystem aufbauen, ohne dass die Module miteinander mechanisch verbunden sein müssten. In der einfachsten Ausführung wird jeweils ein Modul unter einem Standfuss (Maschinenfuss) des Gegenstandes positioniert und dieser auf das Modul gestellt. Je nach Anforderung können ein bis vier Transportmodule in das Transportsystem integriert sein. Bei sehr langen Gegenständen ist der Einsatz von mehr als vier Transportmodulen, beispielsweise von sechs Transportmodulen, denkbar.

In bevorzugter Weise weist das Transportmodul drei Lenkrollen auf. Dadurch ist das Transportmodul statisch bestimmt. Sind mehrere Räder in einer Lenkrolle zu integrieren, ist die Radachse (erste Rotationsachse) so zu gestalten, dass die Last möglichst gleichmässig auf alle Räder einer Lenkrolle verteilt wird. Dies kann beispielsweise mittels einer in der Mitte pendelnd gelagerten Achse erreicht werden. Als Räder einer solchen Lenkrollen können handelsübliche Produkte eingesetzt werden, welche hohe Traglasten bei kleinen Durchmessern aufweisen, wie beispielsweise kugelgelagerte Schwerlasträder aus Gusspolyamid.

Als zweckdienlich hat es sich erwiesen, wenn die ersten Drehachsen gleichmässig verteilt auf einer ersten Kreislinie der zweiten Drehachse liegen. Dadurch erfolgt die Verteilung der Last gleichmässig auf die drei Lenkrollen.

Zweckmässigerweise ist die erste vertikale Drehachse einer Lenkrolle von einer ersten horizontalen Rotationsachse der Lenkrolle beabstandet, wodurch ein Nachlauf definiert ist. Der Nachlauf erleichtert das Drehen der Lenkrolle um die erste Drehachse und verbessert dementsprechend die Lenkbarkeit des Transportmoduls.

Die Erfindung zeichnet sich auch bevorzugt dadurch aus, dass zwei Antriebräder vorgesehen sind, welche auf einer zweiten gemeinsamen horizontalen Rotationsachse und einer zweiten Kreislinie der zweiten Drehachse liegen. Bevorzugt ist es auch, wenn die zweite Rotationsachse die zweite Drehachse schneidet. Diese Merkmale ermöglichen es, dass der Widerstand zur Ortsverschiebung und der Drehung um die zweite Drehachse minimiert wird. Die zwei Antriebräder werden bevorzugt unabhängig voneinander angetrieben.

Bevorzugt ist es, wenn die erste Kreislinie einen ersten Radius aufweist, welcher kleiner ist als der zweite Radius der zweiten Kreislinie. Die Antriebsräder sind dementsprechend möglichst weit aussen an dem Support angeordnet, bzw. die Spurweite wird vergrössert. Dadurch wird das verfügbare Drehmoment um die zweite Drehachse für eine Rotation um diese erhöht. Dies ist vor allem im Stillstand bei einer Drehung der Fahrwerke um die zweite Drehachse ohne Fahrt nötig.

In einer weiteren besonders bevorzugten Ausführungsform der Erfindung weist das Transportmodul wenigstens einen höhenverstellbaren Bremsschuh auf, welcher auf den Untergrund drückbar ist. Dadurch kann eine ungewollte Ortsverschiebung sicher verhindert werden. Zudem ist das Transportmodul nicht alleine auf die Motorbremswirkung angewiesen. Dies ist beispielsweise von Bedeutung, wenn an dem Gegenstand, während er auf dem Transportsystem steht, Arbeiten vorgenommen werden und sich der Gegenstand keinesfalls bewegen darf. Anwendungen, die einer zuverlässigen Fixierung des Gegenstandes bedürfen sind eine Montage während des Transportes, und die Erstprüfung bzw. -inbetriebnahme. Der Bremsschuh kann nach dem Wirkprinzip der schiefen Ebene in Gestalt von handelsüblichen Produkten wie beispielsweise Doppelkeilnivellierelemente realisiert werden. Alternativ kann als Bremsschuh auch ein federrückgestellter Stempel dienen, welcher in der Lenkrolle integriert ist und im Bereich der ersten Drehachse positioniert ist. Die Höhenverstellung des Stempels kann über eine Gewindespindel bzw. eine Stellschraube erfolgen. Vorzugsweise wird dieser aber elektromechanisch fernbetätigt.

In einer weiteren bevorzugten Ausführungsform der Erfindung weist das das Tragelement eine sphärische Lagerung auf. Dies erlaubt einerseits eine individuelle Rotation um die zweite Drehachse des Transportmoduls als auch eine individuelle Anpassung des Transportmoduls an Unebenheiten des Untergrunds. Gleichzeigt können mit einer sphärischen Lagerung auf das Tragelement wirkende Kräfte aus allen Richtungen an den Support weitergeleitet werden. Für eine reibungsarme sphärische Lagerung des Tragelements können handelsübliche Produkte wie beispielsweise Axial-Pendelrollenlager eingesetzt werden. Wird das Tragelement sphärisch gelagert, ist dieses vorzugsweise so klein wie möglich zu gestalten, aber in jedem Fall so gross, dass der zu transportierende Gegenstand, bei einer schweren Werkzeugmaschine beispielsweise mittels Maschinenfuss, sicher darauf platziert werden kann. Typischerweise ist das Tragelement bzw. die Nutzlastaufnahme nicht wesentlich grösser als die Aussenkontur der sphärischen Lagerung, beispielsweise ein vorgenanntes Axial-Pendelrollenlager.

In einer weiteren bevorzugten Ausführungsform der Erfindung ist an der Oberseite des Tragelements ein Verbindungselement positioniert. Eine Verschiebung des zu transportierenden Gegenstandes auf dem Transportmodul kann damit zuverlässig verhindert werden.

Bevorzugt ist es, wenn das Verbindungselement ein Bolzen ist, welcher einen nicht-rotationssymmetrischen Querschnitt aufweist. Mit einem solchen Bolzen kann ein drehfester Formschluss zwischen dem Tragelement und dem zu transportierenden Gegenstand, beispielsweise an einem Maschinenfuss, erzeugt werden. Darüber hinaus wird ein Formschluss zwischen dem zu transportierenden Gegenstand und den Transportmodulen auch dann erforderlich, wenn infolge stark ungleicher Lastverteilung auf alle in einem solchen Transportsystem kombinierten Transportmodulen, oder, einer statischen Unbestimmtheit, wie dies beispielsweise bei einem solchen Transportsystem kombiniert aus mehr als drei Transportmodulen eintreten kann, nicht gewährleistet ist, dass die vertikal auf jedes dieser Transportmodule wirkende Kraftkomponente für einen Kraftschluss zwischen dem zu transportierenden Gegenstand und den Transportmodulen ausreicht. Im Extremfall könnte es ansonsten sogar zu einer vertikalen Separation zwischen dem zu transportierendem Gegenstand und einem der Transportmodule kommen. Ferner kann die Orientierung des zu transportierenden Gegenstandes über den drehfesten Bolzen an das Transportmodul übertragen werden. Mittels eines Winkellagegebers auf dem Transportmodul kann die Orientierung ausgewertet werden. Neigungswinkeländerungen zwischen dem zu transportierenden Gegenstand und dem Transportmodul müssen in der Anbindung des Winkellagegeber, beispielsweise mittels sphärischer Lagerung, berücksichtigt werden.

Als vorteilhaft erweist es sich, wenn der Nachlauf kürzer ist als der Abstand der ersten Drehachse von der zweiten Rotationsachse. Dadurch ist ein Kippen des Transportmoduls um die zweite Rotationsachse der Antriebsräder verhindert, wenn die Lenkrollen eine ungünstige Position einnehmen. Ein kurzer Nachlauf ermöglicht eine gleichmässige Lastverteilung.

In einer weiteren besonders bevorzugten Ausführungsform der Erfindung ist die Radaufhängung durch eine Schwinge mit einem Drehgelenk und einer Federung, welche an dem Support und der Schwinge angreift, realisiert. Dadurch hat das wenigstens eine Antriebsrad immer ausreichend Kontakt zum Untergrund und eine ausreichende Traktion ist sichergestellt. Die Schwinge erlaubt eine niedrige Bauform des Transportmoduls.

Weiters bevorzugt ist es, wenn die Radaufhängung eine Höhenverstellung des wenigstens einen Antriebsrades aufweist. Durch die Höhenverstellung lässt sich die Last bedarfsgerecht zwischen den Lenkrollen und den Antriebrädern verteilen. Dadurch lässt sich auch die Traktion der Antriebsräder verstärken oder reduzieren. Zudem lassen sich die Antriebräder vollständig vom Untergrund abheben, wodurch der Gegenstand manuell verschoben werden kann. Auch lässt sich der Gegenstand spannungsfrei machen, indem die Antriebräder angehoben werden.

Wird der Kontakt zwischen den Antriebsrädern und dem Untergrund unterbrochen, erlaubt dies eine manuelle Ortsverschiebung sowohl eines einzelnen dieser Transportmodule ohne Zuladung als auch des zu transportierenden Gegenstandes, während sich dieser beispielsweise auf einem, aus mehreren einzelnen solcher Transportmodule kombinierten, Transportsystem befindet. Dies kann insbesondere dann von Nutzen sein, wenn eine manuelle Ortsverschiebung effizienter erscheint als eine motorisierte Ortsverschiebung oder infolge Störung eine motorisierte Ortsverschiebung nicht mehr möglich ist. Zudem ist die Austauschbarkeit eines einzelnen Transportmoduls so jederzeit gewährleistet. Dafür kann beispielsweise die Höhe eines Maschinenfusses, welcher auf einem Transportmodul steht, verringert werden, wodurch das auszutauschende Transportmodul entlastet wird. Zum Austausch kann das Transportmodul unterhalb des Gegenstandes herausgezogen werden.

Zweckmässigerweise sind an dem Support wenigstens ein Antriebsregler und wenigstens ein Energiespeicher angeordnet. Sowohl der Energiespeicher als auch der Antriebsregler können für jedes Transportmodul einzeln in die Transportmodule integriert werden, als auch als separate Einheit zentral für alle in einem aus mehreren solcher Transportmodule kombinierten Transportsystem mitgeführt werden. Vorzugsweise werden diese Energiespeicher und Antriebsregler in das Transportmodul integriert, was zwar die Komplexität erhöht, jedoch die Anwendung desselben vereinfacht.

Bevorzugt ist es, wenn das Transportmodul zusammen mit wenigstens einem weiteren Transportmodul als eine Transporteinheit steuerbar ist oder unabhängig von einem wenigstens weiteren Transportmodul steuerbar ist. Dadurch lassen sich mehrere Transportmodule in einem Transportsystem synchronisieren.

Ein weiterer Aspekt der Erfindung betrifft ein Transportsystem zum Transport eines Gegenstandes, insbesondere in einer Produktionslinie einer technischen Anlage. Die Erfindung zeichnet sich dadurch aus, dass das Transportsystem wenigstens ein weiteres Transportmodul oder wenigstens ein antriebsloses Lastmodul aufweist, wobei jedes Transport- und Lastmodul direkt mit dem Gegenstand verbindbar ist und die Module frei von einer mechanischen Verbindung untereinander sind. Das Transportsystem ist äusserst flexibel und sehr gut lenkbar. Zur Kostenreduktion bei gleicher Flächenbeweglichkeit, aber reduzierten Anforderungen an die dynamischen Fahrleistungen solcher Transportsysteme, können mindestens zwei Transportmodule mit mindestens einem handelsüblichen, nicht motorisiertem Transportfahrwerk, beispielsweise einem Kreiselfahrwerk, zu einem Transportsystem kombiniert werden. Zur weiteren Kostenreduktion jedoch auf Kosten einer eingeschränkten Beweglichkeit kann ein Transportmodul mit zwei als Lastmodul fungierenden Panzerrollen kombiniert werden. Mit Transportsystemen gemäss dieser Erfindung lässt sich die Produktlogistik für unterschiedliche Ausprägungen von Fertigungsprozessen, wie beispielsweise die Inselfertigung, die Werkstattfertigung, die Fliessfertigung oder die modulare Produktion gleichermassen effizient realisieren. Die zu transportierenden Gegenstände können einzeln oder, wie beispielsweise in einer Fliessfertigung üblich, als Gruppe von zu transportierenden Gegenständen synchron bewegt werden. Dabei ist es nicht relevant, ob diese Bewegung unterbrochen wird oder weiterläuft, während am zu transportierenden Gegenstand Arbeiten ausgeführt werden. Ausgenommen sind vorgenannte Situation, die, um eine unbeabsichtigte Ortsverschiebung zu verhindern, einen ortsfesten Kontakt zwischen Transportmodul und Untergrund erfordern.

Die einzelnen Tragelemente aller zu einem Transportsystem gemäss dieser Erfindung kombinierten Transportmodule und Lastmodule bilden die primären und vorzugsweise einzigen physische Kontakte mit dem zu transportierenden Gegenstand. Eine gedachte Ebene über alle Tragelemente der in einem solchen Transportsystem kombinierten Transportmodule substituiert somit den Untergrund. Daraus lässt sich ableiten, dass grundsätzlich jeder Gegenstand, der stabil auf einen festen Untergrund gestellt werden kann, auch durch ein Transportsystem gemäss dieser Erfindung transportiert werden kann.

Bevorzugt ist es, wenn die Transportmodule eines Transportsystem als eine gemeinsame Einheit steuerbar sind. Über eine in ein Transportmodul integrierte Kommunikationseinheit kann, vorzugsweise mittels kabelloser Verbindung, mindestens ein Transportmodul mit einer übergeordneten Steuerung verbunden werden. Diese übergeordnete Steuerung kann sowohl dezentral in mindestens eines der in einem Transportsystem kombinierten Transportmodule integriert und, beispielsweise über eine Fernbedienung bedient, als auch zentral, beispielsweise als Prozessleitsystem, betrieben werden. Vorzugsweise wird diese übergeordnete Steuerung aber in ein tragbares, elektronisches Gerät mit Mensch-Maschinen-Schnittstelle integriert, um eine manuelle Funkfernsteuerung durch einen Anwender zu ermöglichen.

Werden mehrere dieser Transportmodule zu einem Transportsystem kombiniert, müssen die an einem solchen Transportsystem teilnehmenden Transportmodule von einer übergeordneten Steuerung initialisiert werden. Dazu sind neben der Information zum Status primär die Informationen zu Position und Orientierung aller teilnehmenden Transportmodule relevant. Sowohl die Position als auch die Orientierung können relativ zum Umfeld oder relativ zum zu transportierenden Gegenstand bestimmt werden, oder beides gleichzeitig. Während diese Informationen zu Position und Orientierung relativ zum Umfeld veränderlich sind und für eine vorgenannte zentrale Steuerung kontinuierlich nachgeführt werden müssen, reicht es in einem einfacheren Anwendungsfall, beispielsweise bei Verwendung einer vorgenannten manuellen Funkfernsteuerung, aus, diese Informationen zu Position und Orientierung der teilnehmenden Transportmodule relativ zum zu transportierenden Gegenstand zu bestimmen. Während in diesem einfacheren Anwendungsfall diese Information zur Position somit über die Anwendungsdauer konstant bleibt, ist diese Information zur Orientierung jedes dieser beteiligten Transportmodule dennoch veränderlich und muss in jedem Anwendungsfall kontinuierlich nachgeführt werden.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine axonometrische Ansicht eines Transportmoduls;
- Figur 2:: eine Unteransicht des Transportmoduls aus Figur 1;
- Figur 3:: eine Seitenansicht des Transportmoduls mit einem vorderen Halbschnitt;
- Figur4:: eine Schnittdarstellung durch eine Lenkrolle;
- Figur 5a:: eine Schnittdarstellung einer Radaufhängung eines Antriebsrades in einer ersten Ausführungsform;
- Figur 5b:: eine Schnittdarstellung einer Radaufhängung eines Antriebsrades in einer zweiten Ausführungsform;
- Figur 6:: eine Schnittdarstellung des Transportmoduls im Bereich eines Befestigungselementes;
- Figur 7:: Ausführungsbeispiele eines Transportsystems in Unteransichten und
- Figur 8a bis 8c:: Ausführungsbeispiele von Produktionssystemen mit mehreren Transportsystemen im Einsatz.

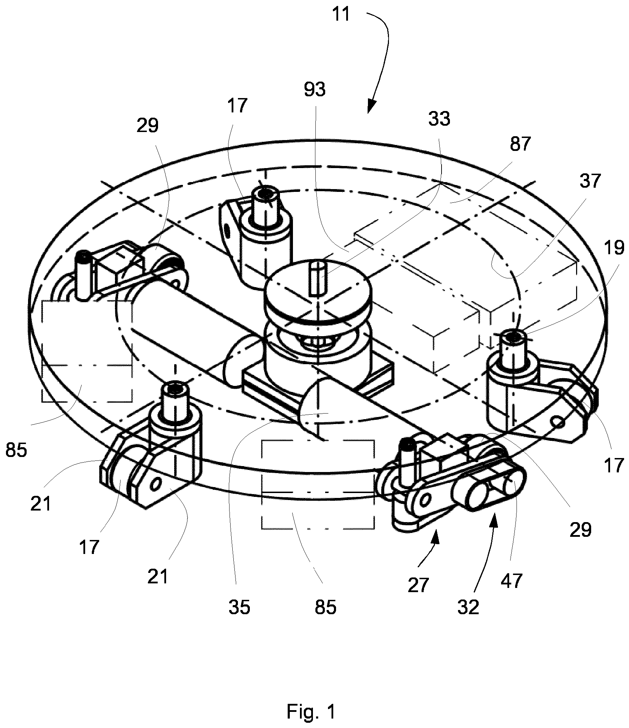

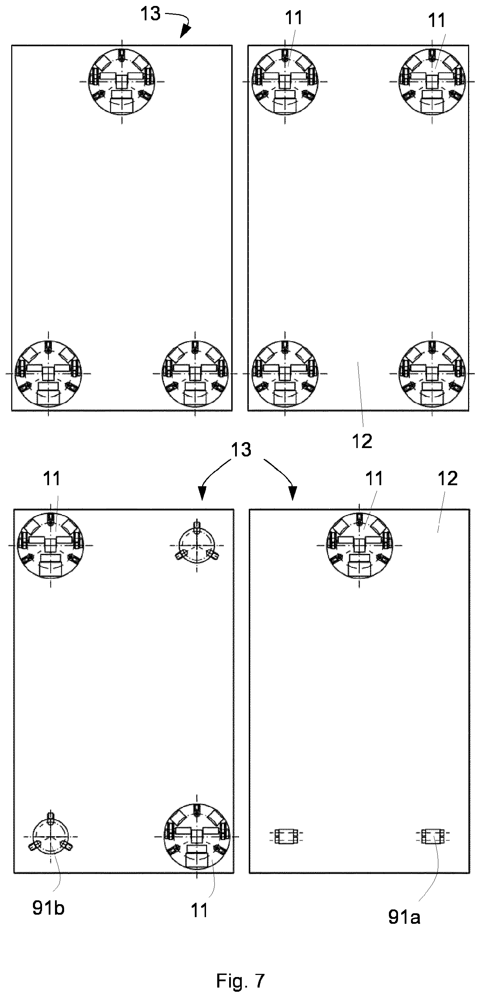

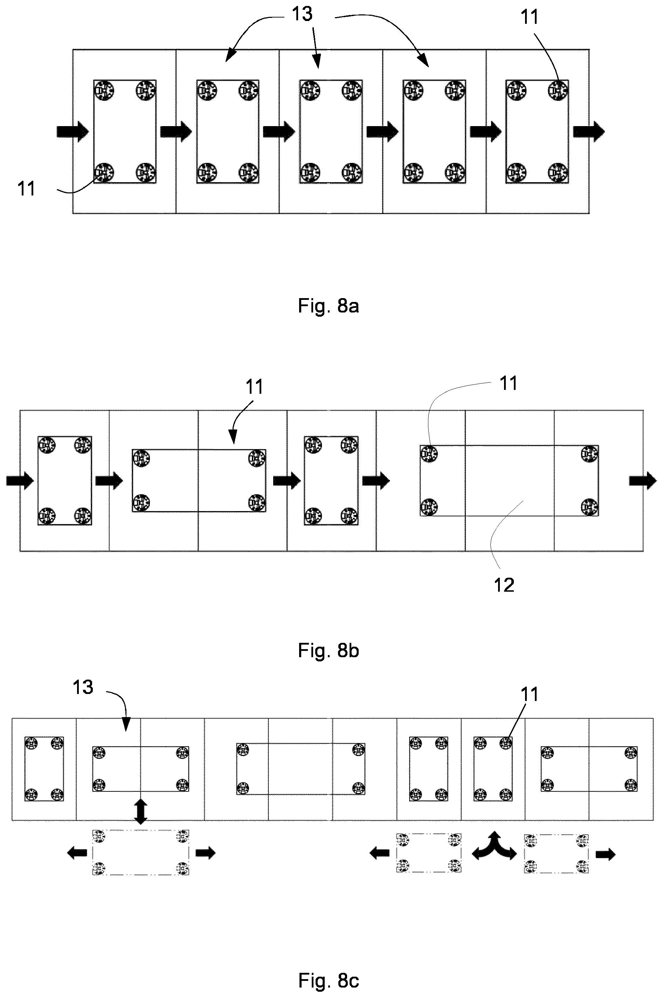

In den Figuren 1 bis 3 ist ein Transportmodul gezeigt, welches gesamthaft mit dem Bezugszeichen 11 bezeichnet ist. Das Transportmodul 11 dient dem Transport eines Gegenstandes 12. Der Gegenstand kann ein Produkt sein, welches in einer Produktionslinie einer technischen Anlage auf einem flächenbeweglichen Transportsystem 13 bewegt wird. Der Gegenstand 12, welcher beispielsweise eine Werkzeugmaschine sein kann, kann auf dem Transportsystem 13, welches in den Figuren 7 und 8 gezeigt ist, nicht nur bewegt werden, sondern auch aufgebaut bzw. produziert werden und es können an dem Gegenstand Arbeiten vorgenommen werden, während er auf dem Transportsystem steht. Das Transportsystem 13 umfasst wenigstens ein Transportmodul 11.

Das Transportmodul 11 weist einen Support 15 auf, welcher auch als eine Tragestruktur bezeichnet werden kann. An dem Support sind drei Lenkrollen 17 befestigt. Jede Lenkrolle 17 ist drehbar um eine erste vertikale Drehachse 19 an dem Support befestigt und von der ersten Drehachse 19 mit zwei Haltearmen 21 von der Drehachse 19 beabstandet. Der Abstand zwischen der ersten horizontalen Rotationsachse 23 der Lenkrolle 17 und der ersten Drehachse 19 definiert einen Nachlauf 25.

An dem Support 15 ist weiters eine Antriebseinheit 27 befestigt, wobei die Antriebseinheit zwei Antriebsräder 29 aufweist. Jedes Antriebsrad ist bevorzugt durch einen separaten Motor 31 angetrieben.

An dem Support 15 ist ein Befestigungselement in Gestalt eines Bolzens 33 ausgebildet, durch welchen eine zweite vertikale Drehachse 35 verläuft. Der Bolzen erhebt sich von einem scheibenförmigen Tragelement 34, welches seinerseits an dem Support 15 befestigt ist. Das Transportmodul 11 lässt sich durch den Bolzen 33 direkt mit dem Gegenstand verbinden und lässt sich relativ zu dem Gegenstand um die zweite Drehachse 35 rotieren. Zusammen mit den Lenkrollen 17 besitzt das Transportmodul eine hohe Wendigkeit und einen minimalen Wendekreis.

Die drei ersten Drehachsen 19 liegen auf einer ersten Kreislinie 37, auf deren Mittelpunkt 39 die zweite Drehachse 35 senkrecht steht. Bevorzugt schliessen die benachbarten Verbindungslinien 41 der ersten Drehpunkte, welche die Schnittpunkte der ersten Drehachsen mit der Supportebene sind, mit dem Mittelpunkt 39 einen Öffnungswinkel 43 von 120° mit dem Mittelpunkt 39 ein.

Auf einer zweiten Kreislinie 45 mit dem Mittelpunkt 39 liegen die Mittelpunkte der beiden Antriebsräder 29. Diese Mittelpunkte liegen auch auf einer zweiten gemeinsamen Rotationsachse 47 der Antriebräder.

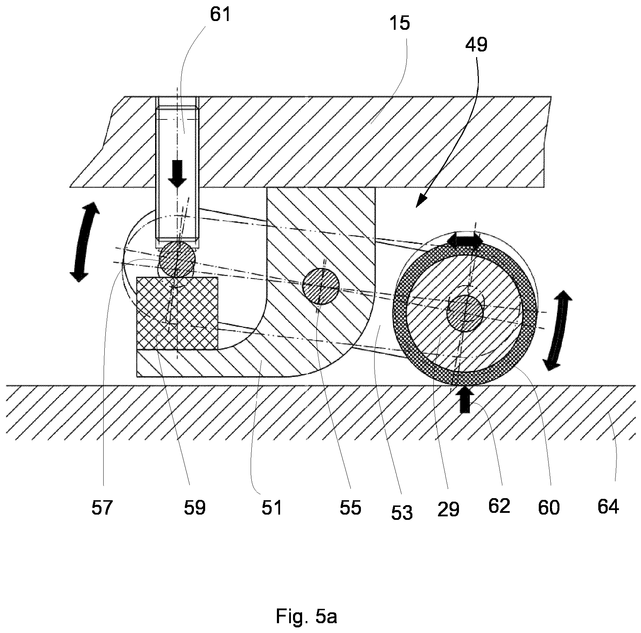

Die Antriebsräder 29 sind jeweils mit einer Radaufhängung 49 in einer ersten Ausführungsform mit dem Support 15 verbunden, welche im Detail in Figur 5a gezeigt ist. Ein L-förmiger Träger 51 ist fest mit der Unterseite des Supports verbunden. An dem Träger 51 ist eine Schwinge 53 mit einem Gelenk 55 angelenkt. Die Schwinge ist bevorzugt zweiteilig ausgebildet. Das Gelenk befindet sich in der Mitte der Schwinge 53. Am ersten Ende der Schwinge 53 ist das Antriebsrad 29 rotierend gehalten und am zweiten Ende steht ein Quersteg 57 ab. Der Quersteg 57 ist zwischen einem Federelement 59, welches sich an dem offenen Ende des Trägers 51 abstützt, und einer ersten Stellschraube 61 eingeklemmt. Das Federelement 59 kann ein Elastomer sein, welches bei Bewegung der Schwinge 53 komprimiert wird und sich nach der Belastung dekomprimiert.

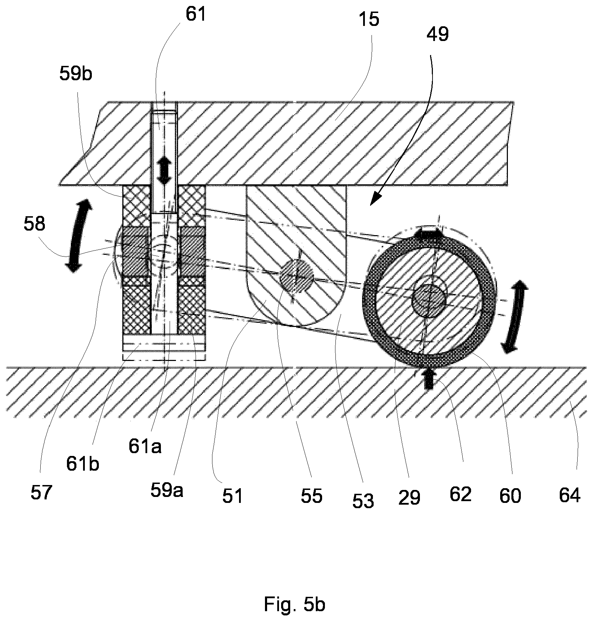

In der Figur 5b ist eine zweite Ausführungsform der Radaufhängung 49 gezeigt. Das Federelement liegt dabei nicht auf dem Träger 51 wie in der ersten Ausführungsform auf. Der Schraubenschaft 61a der Stellschraube 61 durchdringt einen Haltering 58, ein erstes Federelement 59a und ein zweites Federelement 59b. In der zweiten Ausführungsform ist der Quersteg 57 zweiteilig ausgeführt und ist an zwei gegenüberliegenden Stellen an dem Haltering 58 befestigt. Das erste Federelement 59a ist zwischen dem Haltering 58 und einem Schraubenteller 61b angeordnet. Dieses Design der Radaufhängung 49 ermöglicht es, dass die Federelemente 59a,59b beim Anheben des Antriebsrades durch Ausschrauben der Stellschraube 61 nicht komprimiert werden müssen. Durch Verstellen der ersten Stellschraube 61 kann das Antriebsrad 29 in seiner Höhe eingestellt werden. Dadurch kann der Anpressdruck 62 des Antriebrades 29 auf den Untergrund 64 fein justiert werden und das Rad 29 liefert ausreichend Traktion für einen zuverlässigen Antrieb des Transportmoduls 11. Dabei bewegt sich der Haltering 58 zwischen den Federelementen 59a,59b und komprimiert bzw. dekomprimiert diese. Durch die Federung hat das Rad 29 einerseits bei Unebenheiten des Untergrundes immer Kontakt zu diesem und der Antrieb gestaltet sich unterbrechungsfrei und gleichmässig. Andererseits ist der Anpressdruck nicht zu hoch, dass der weiche traktionsfördernde Laufbelag 60 zu stark belastet werden würde. Das Antriebsrad 29 kann auch vollständig vom Untergrund abgehoben werden, sodass die Last zu 100% auf die Lenkrollen übertragbar ist. Dies ist insbesondere von Vorteil, wenn das Transportmodul 11 manuell bewegt werden muss oder der Gegenstand in einen spannungsfreien Zustand rückgeführt werden soll.

Zur motorisierten Ortsverschiebung muss jedes Antriebsrad 29 individuell in beide Drehrichtungen angetrieben werden können. Jeder Motor 31 treibt ein Antriebsrad 29 direkt oder indirekt an. Aus platztechnischen Gründen bietet sich allerdings ein indirekter Antrieb der Antriebsräder 29 an. Vorzugswiese wird bei einem indirekten Antrieb eine solche Antriebseinheit auf der Schwinge 53 integriert und die Antriebskraft mittels eines Rädergetriebes 32 auf das jeweilige Antriebsrad 29 übertragen. Alternativ können die Motoren 31 auch an einem feststehenden Teil der Radaufhängung, beispielsweise dem Träger 51, oder an dem Support 15 integriert und die Antriebskraft beispielsweise mittels einer kardanisch gelagerten Antriebswelle auf die Antriebsräder 29 übertragen werden. Als Motoren 31 können am Markt verfügbare Produkte mit hoher Leistungsdichte und vorzugsweise integrierter Betriebsbremse eingesetzt werden, wie beispielsweise speziell für den Einsatz in führerlosen Transportfahrzeugen konzipierte Elektromotoren.

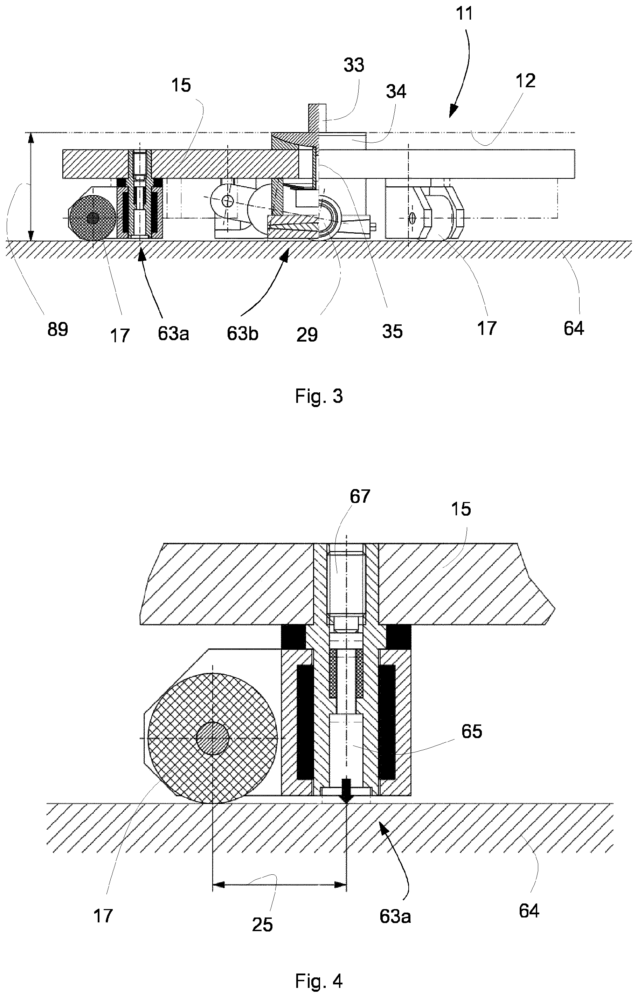

Das Transportmodul 11 verfügt über wenigstens einen Bremsschuh. In der Figur 3 und 4 ist ein erster Bremsschuh 63a gezeigt, welcher einen höhenverstellbaren Stempel 65 und eine zweite vertikal verstellbare Stellschraube 67 aufweist. Der Bremsschuh 63a ist in der ersten Drehachse 19 integriert.

Unterhalb des Tragelements 34 ist ein zweiter Bremsschuh 63b an dem Support 15 angeordnet. Dieser besteht aus einem Keil 69, welcher zwischen ein oberes und unteres Gegenstück 71a,71b gedrückt werden kann. Dadurch wird das untere Gegenstück 71b auf den Untergrund 64 gedrückt und wirkt bremsend auf das Transportmodul 11.

Der Bremsschuh 63a bzw. 63b dient insbesondere der horizontalen Feststellung des Transportsystems 13. Zusätzlich kann das Transportmodul 11 und der Gegenstand 12 mit Hilfe der Bremsschuhe 63a, 63b abgebremst und sogar angehoben, bzw. aufgebockt werden.

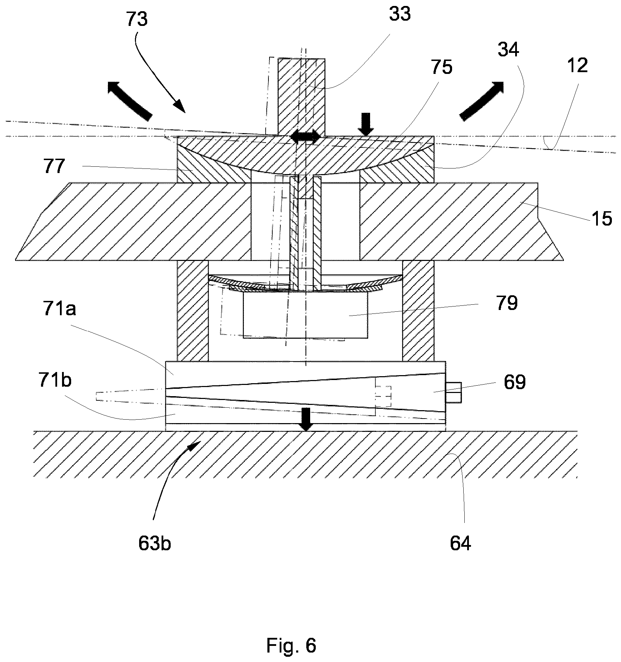

Das Transportmodul ist mit einer sphärischen bzw. einer kugeligen Lagerung 73 ausgestattet, welche in Figur 6 exemplarisch gezeigt ist und als ein Axial-Pendelrollenlager realisiert sein kann. Die Lagerung 73 ist in das Tragelement 34 integriert. Ein Pendelelement 75, von welchem der Bolzen 33 abragt, ist auf einem Tragelement 77 pendelnd aufgesetzt. Das Pendelelement 75 ist mit einem Winkellagegeber 79 fest verbunden, welcher die Orientierung des Transportmoduls relativ zum Gegenstand an die Steuerung übermitteln kann. Der Winkellagegeber 79 ist so am Support gelagert, dass er zwar die Schwenkbewegung des sphärisch gelagerten Tragelements 34 mitgehen kann, aber keine Rotation auf diesen übertragen wird.

Bevorzugt ist es, wenn der Durchmesser der zweiten Kreislinie 45 möglichst gross ist und dementsprechend am Rand des Supports 15 angeordnet ist. Dadurch haben die beiden Antriebsräder eine möglichst grosse Spurweite, wodurch das Transportmodul 11 ein höheres Drehmoment um die zweite Drehachse 35 erhält. Zweckmässigerweise ist der Durchmesser der zweiten Kreislinie kleiner als der Durchmesser 81 des Supports 15, damit die Antriebsräder 29 geschützt sind.

Der Bolzen 33 besitzt einen nicht-rotationssymmetrischen Querschnitt, welcher beispielsweise tropfenförmig sein kann. Dadurch ist die Position des Transportmoduls 11 relativ zu dem zu transportierenden Gegenstand festgelegt, da der Bolzen 33 immer drehfest zu dem Gegenstand positioniert ist. Die Orientierung des zu transportierenden Gegenstandes 12 wird somit über den Bolzen 33 an das Transportmodul 11 übertragen Der Nachlauf 25 ist kürzer als der horizontale Abstand 83 der ersten Drehachsen 19 von der zweiten Rotationsachse 47. Dadurch ist sichergestellt, dass das Transportmodul nicht um die zweite Rotationsachse 47 kippen kann.

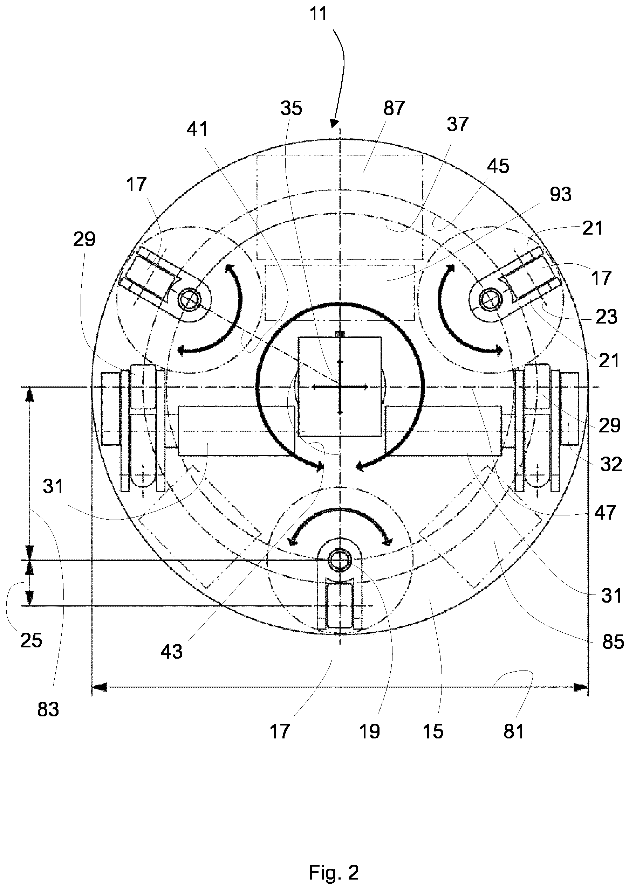

Das Transportmodul 11 ist mit wenigstens einem Antriebsregler 85 und wenigstens einem Energiespeicher 87 bestückt, welche in den Figuren 1 und 2 angedeutet sind. Zweckmässigerweise ist der Energiespeicher ein wiederaufladbarer Akku.

Die beschriebenen Merkmale des Transportmoduls 11 ermöglichen es, dass die Kernfunktionen Last aufnehmen, Last tragen und Last bewegen in für sich eigenständigen Komponenten separiert werden. Die Funktion Last tragen wird durch die Lenkrollen 17 erfüllt. Die Funktion Last bewegen wird durch Antriebsräder 29 erfüllt. Die Funktion Last aufnehmen wird durch das Tragelement 77 erfüllt. Dadurch besitzt das Transportmodul 11 eine geringe Bauhöhe 89. Die Bauhöhe steigt zwangsläufig mit der geforderten Nutzlast. Beispielsweise besitzt das Transportmodul 11 bei einer Nutzlast von 8 t lediglich eine Bauhöhe von ca. 200 mm und einen Durchmesser 81 von 1000mm. Das erfindungsgemässe Transportmodul 11 ist damit deutlich kompakter als vergleichbare Transportfahrzeuge mit ähnlichem Funktionsumfang nach bekanntem Stand der Technik. Das Transportmodul 11 kann derart ausgelegt werden, dass es eine Nutzlast von bis zu 25 t aufweist.

In den Figuren 7 und 8 sind Transportsysteme 13 skizziert, welche ein Transportmodul 11 umfassen. Das Transportsystem 13 weist wenigstens ein weiteres Transportmodul 11 oder wenigstens ein antriebsloses Lastmodul 91 auf, wobei jedes Transport- und Lastmodul direkt mit dem Gegenstand 12 verbindbar ist. Dabei kann der Gegenstand 12 auf dem Tragelement 34 lediglich abgestellt sein oder ist über den Bolzen 33 mit dem Gegenstand formschlüssig verbunden. Diese Art der Verbindung lässt sich auch für das Lastmodul 91 verwenden. Die räumliche Anordnung der einzelnen Transport- bzw. Lastmodule 11,91 eines solchen Transportsystems 13 wird durch die Form und Masse des zu transportierenden Gegenstandes 12 bestimmt. Wird wenigstens ein einzelnes Transportmodul 11 mit mindestens einem, nicht motorisierten Transportmodul 91, beispielsweise unter dem Begriff Panzerrollen 91a oder Kreiselfahrwerk 91b bekannt, zu einem Transportsystem 13 kombiniert, ist dies kostengünstiger, die Beweglichkeit des entstehenden Transportsystems ist jedoch eingeschränkt. Die Module 11,91 sind bevorzugt frei von einer mechanischen Verbindung untereinander. Das Transportsystem 13 weist daher bevorzugt keinen Rahmen auf, an dem Transport- und Lastmodule befestigt sind. Dadurch sind die Module 11,91 mit Gegenständen 12 mit den unterschiedlichsten Grundrissen bzw. Bodenausgestaltungen rasch verbindbar. Falls die Gegenstände alle den gleichen Grundriss aufweisen, kann das Vorsehen eines Rahmens von Vorteil sein.

Mit Transportsystemen 13 gemäss dieser Erfindung lässt sich die Produktlogistik für unterschiedliche Ausprägungen von Fertigungsprozessen, wie beispielsweise die Inselfertigung, die Werkstattfertigung, die Fliessfertigung (Fig. 8a, Fig. 8b) oder die modulare Produktion (Fig. 8c) gleichermassen effizient realisieren. In Figur 8a ist gezeigt, dass auf jedem Transportsystem 13 derselbe Gegenstand positioniert ist. Figur 8b zeigt, dass auch unterschiedliche Gegenstände auf dem Transportsystemen 13 in derselben Produktionslinie gefertigt werden können (Mixed-Modell-Line). Die zu transportierenden Gegenstände 12 können einzeln oder, wie beispielsweise in einer Fliessfertigung üblich, als Gruppe von zu transportierenden Gegenständen synchron bewegt werden. Dabei ist es nicht relevant, ob diese Bewegung unterbrochen wird oder weiterläuft, während am zu transportierenden Gegenstand 12 Arbeiten ausgeführt werden.

Über eine in das Transportmodul 11 integrierte Kommunikationseinheit 93 (Fig. 1 und 2) kann, vorzugsweise mittels kabelloser Funkverbindung, mindestens ein Transportmodul 11 mit einer übergeordneten Steuerung verbunden werden. Diese übergeordnete Steuerung kann sowohl dezentral in mindestens eines der in einem Transportsystem 13 kombinierten Transportmodul 11 integriert und, beispielsweise über eine Fernbedienung bedient, als auch zentral, beispielsweise als Prozessleitsystem, betrieben werden. Vorzugsweise wird diese übergeordnete Steuerung aber in ein tragbares, elektronisches Gerät mit Mensch-Maschinen-Schnittstelle integriert, um eine manuelle Funkfernsteuerung durch einen Anwender zu ermöglichen.

Werden mehrere Transportmodule 11, wie weiter oben beschrieben, zu einem Transportsystem 13 kombiniert, müssen die an einem solchen Transportsystem 13 teilnehmenden Transportmodule von einer übergeordneten Steuerung initialisiert werden. Dazu sind neben der Information zum Status primär die Informationen zu Position und Orientierung aller teilnehmenden Transportmodule 11 relevant. Sowohl die Position als auch die Orientierung können relativ zum Umfeld oder relativ zum zu transportierenden Gegenstand 12 bestimmt werden, oder beides gleichzeitig.

### Legende:

- 11: Transportmodul
- 12: Gegenstand
- 13: Transportsystem
- 15: Support
- 17: Lenkrollen
- 19: Erste Drehachse
- 21: Haltearme
- 23: Erste Rotationsachse
- 25: Nachlauf
- 27: Antriebseinheit
- 29: Antriebsräder
- 31: Motor
- 32: Rädergetriebe
- 33: Verbindungselement, Bolzen
- 34: Tragelement
- 35: Zweite Drehachse
- 37: Erste Kreislinie
- 39: Mittelpunkt der ersten und zweiten Kreislinie
- 41: Verbindungslinien
- 43: Öffnungswinkel
- 45: Zweite Kreislinie
- 47: Zweite Rotationsachse
- 49: Radaufhängung
- 51: Träger
- 53: Schwinge

- 55: Gelenk
- 57: Quersteg
- 58: Haltering
- 59, 59a, 59b: Federelement, erstes und zweites Federelement
- 60: Laufbelag
- 61: Erste Stellschraube
- 61a: Schraubenschaft
- 61b: Schraubenteller
- 62: Anpressdruck
- 63a,63b: Erster und zweiter Bremsschuh
- 64: Untergrund
- 65: Stempel
- 67: Zweite Stellschraube
- 69: Keil
- 71a,71b: Unteres und oberes Gegenstück
- 73: Sphärische Lagerung, Pendellagerung
- 75: Pendelelement
- 77: Tragelement
- 79: Winkellagegeber
- 81: Durchmesser des Supports
- 83: Abstand
- 85: Antriebsregler
- 87: Energiespeicher
- 89: Bauhöhe
- 91, 91a, 91b: Lastmodul, Panzerrollen, Kreiselfahrwerk
- 93: Kommunikationseinheit

## Patentansprüche

1. Transportmodul (11) zum Transport eines Gegenstandes (12), insbesondere in einer Produktionslinie einer technischen Anlage, aufweisend
- einen Support (15),
- eine Mehrzahl von Lenkrollen (17), welche an dem Support (15) jeweils drehbar um eine erste vertikale Drehachse (19) befestigt sind und
- eine Antriebseinheit (27) mit wenigstens einem motorbetriebenen Antriebsrad (29), welche an dem Support (15) befestigt ist,
**dadurch gekennzeichnet,**
- **dass** das Transportmodul (11) mit einem Tragelement (34) derart mit dem zu transportierenden Gegenstand (12) verbindbar ist, dass es um eine zweite vertikale Drehachse (35) drehbar ist, und
- **dass** das wenigstens eine Antriebsrad (29), mit einer Radaufhängung (49) an dem Support (15) befestigt ist, wobei durch die Radaufhängung (49) die Last zwischen den Lenkrollen (17) und dem wenigstens einen Antriebsrad (29) verteilbar ist und auf bis zu 100% auf die Lenkrollen (17) übertragen werden kann.

2. Transportmodul nach Anspruch 1, **dadurch gekennzeichnet, dass** das Transportmodul (11) dafür vorgesehen ist, mit wenigstens einem weiteren Transport- oder einem antriebslosen Lastmodul (11,91) ein Transportsystem (13) zu bilden und gemeinsam mit dem weiteren Transport- oder Lastmodul den Gegenstand (12) transportieren zu können.

3. Transportmodul nach Anspruch 1 oder 2, **dadurch gekennzeichnet, dass** das Transportmodul (11) drei Lenkrollen (17) aufweist.

4. Transportmodul nach einem der vorangehenden Ansprüche, **dadurch gekennzeichnet, dass** die ersten Drehachsen (19) auf einer ersten Kreislinie (37) der zweiten Drehachse (35) liegen.

5. Transportmodul nach einem der vorangehenden Ansprüche, **dadurch gekennzeichnet, dass** die erste vertikale Drehachse (19) einer Lenkrolle von einer ersten horizontalen Rotationsachse (23) der Lenkrolle beabstandet ist, wodurch ein Nachlauf (25) definiert ist.

6. Transportmodul nach einem der vorangehenden Ansprüche, **dadurch gekennzeichnet, dass** zwei Antriebräder (29) vorgesehen sind, welche auf einer zweiten gemeinsamen horizontalen Rotationsachse (47) und einer zweiten Kreislinie (45) der zweiten Drehachse (35) liegen.

7. Transportmodul nach Anspruch 6, **dadurch gekennzeichnet, dass** die zweite Rotationsachse (47) die zweite Drehachse (35) schneidet.

8. Transportmodul nach einem der Ansprüche 6 oder 7, **dadurch gekennzeichnet, dass** die erste Kreislinie (37) einen ersten Radius aufweist, welcher kleiner ist als der zweite Radius der zweiten Kreislinie (45).

9. Transportmodul nach einem der vorangehenden Ansprüche, **dadurch gekennzeichnet, dass** das Transportmodul (11) wenigstens einen höhenverstellbaren Bremsschuh (63) aufweist, welcher auf den Untergrund (64) drückbar ist.

10. Transportmodul nach einem der vorangehenden Ansprüche, **dadurch gekennzeichnet, dass** das Tragelement (34) eine sphärische Lagerung (73) aufweist.

11. Transportmodul nach einem der vorangehenden Ansprüche, **dadurch gekennzeichnet, dass** an der Oberseite des Tragelement (34) ein Verbindungselement (33) positioniert ist.

12. Transportmodul nach Anspruch 11, **dadurch gekennzeichnet, dass** das Verbindungselement ein Bolzen (33) ist, welcher einen nicht-rotationssymmetrischen Querschnitt aufweist.

13. Transportmodul nach einem der Ansprüche 5 bis 12, **dadurch gekennzeichnet, dass** der Nachlauf (25) kürzer ist als der Abstand (83) der ersten Drehachse (19) von der zweiten Rotationsachse (47).

14. Transportmodul nach einem der vorangehenden Ansprüche, **dadurch gekennzeichnet, dass** die Radaufhängung (49) durch eine Schwinge (53) mit einem Drehgelenk (55) und einer Federung (59), welche an dem Support (15) und der Schwinge (53) angreift, realisiert ist.

15. Transportmodul nach einem der vorangehenden Ansprüche, **dadurch gekennzeichnet, dass** die Radaufhängung (49) eine Höhenverstellung des wenigstens einen Antriebsrades (29) aufweist.

16. Transportmodul nach einem der vorangehenden Ansprüche, **dadurch gekennzeichnet, dass** an dem Support (15) wenigstens ein Antriebsregler (85) und wenigstens ein Energiespeicher (87) angeordnet sind.

17. Transportmodul nach einem der vorangehenden Ansprüche, **dadurch gekennzeichnet, dass** das Transportmodul (11) zusammen mit wenigstens einem weiteren Transportmodul (11) als eine Transporteinheit steuerbar ist oder unabhängig von einem wenigstens weiteren Transportmodul (11) steuerbar ist.

18. Transportsystem (13) zum Transport eines Gegenstandes (12), insbesondere in einer Produktionslinie einer technischen Anlage, umfassend ein Transportmodul (11) gemäss einem der vorangehenden Ansprüche,
**dadurch gekennzeichnet,**
**dass** das Transportsystem (13) wenigstens ein weiteres Transportmodul (11) oder wenigstens ein antriebsloses Lastmodul (91) aufweist, wobei jedes Transport- und Lastmodul (11,91) direkt mit dem Gegenstand (12) verbindbar ist und die Module frei von einer mechanischen Verbindung untereinander sind.

19. Transportsystem nach Anspruch 18, **dadurch gekennzeichnet, dass** die Transportmodule (11) eines Transportsystems (13) als eine gemeinsame Einheit steuerbar sind.

## Claims

1. A transport module (11) for transporting an object (12), in particular in a production line of a technical facility, having
- a support (15),
- a plurality of swivel castors (17), which are each fastened to a support (15) so that they can rotate around a first vertical turning axis (19), and
- a drive unit (27) with at least one motor-driven drive wheel (29), which is fastened to the support (15),
**characterized in that**
- the transport module (11) with a supporting element (34) can be connected with the object (12) to be transported in such a way that it can be rotated around a second vertical turning axis (35), and that
- the at least one drive wheel (29) is fastened to the support (15) with a wheel suspension (49), wherein the wheel suspension (49) makes it possible to distribute the load between the swivel castors (17) and the at least one drive wheel (29) and transfer up to 100% of it to the swivel castors (17).

2. The transport module according to claim 1, **characterized in that** the transport module (11) is provided to form a transport system (13) with at least one additional transport or a non-powered load module (11, 91), and to be able to transport the object (12) together with the additional transport or load module.

3. The transport module according to claim 1 or 2, **characterized in that** the transport module (11) has three swivel castors (17).

4. The transport module according to one of the preceding claims, **characterized in that** the first axes of rotation (19) lie on a first circle line (37) of the second turning axis (35).

5. The transport module according to one of the preceding claims, **characterized in that** the first vertical turning axis (19) of one swivel castor is spaced apart from a first horizontal turning axis (23) of the swivel castor, which defines a castor angle (25).

6. The transport module according to one of the preceding claims, **characterized in that** two drive wheels (29) are provided, which lie on a second single horizontal turning axis (47) and a second circle line (45) of the second turning axis (35).

7. The transport module according to claim 6, **characterized in that** the second rotation axis (47) intersects the second turning axis (35).

8. The transport module according to one of claims 6 or 7, **characterized in that** the first circle line (37) has a radius that is smaller than the second radius of the second circle line (45).

9. The transport module according to one of the preceding claims, **characterized in that** the transport module (11) has at least one height-adjustable brake shoe (63), which can be pressed onto the substrate (64).

10. The transport module according to one of the preceding claims, **characterized in that** the supporting element (34) has a spherical bearing (73).

11. The transport module according to one of the preceding claims, **characterized in that** a connecting element (33) is positioned on the upper side of the supporting element (34).

12. The transport module according to claim 11, **characterized in that** the connecting element is a bolt (33) that has a non-rotationally symmetrical cross section.

13. The transport module according to one of claims 5 to 12, **characterized in that** the castor angle (25) is shorter than the distance (83) between the first turning axis (19) and the second rotation axis (47).

14. The transport module according to one of the preceding claims, **characterized in that** the wheel suspension (49) is realized by swing arm (53) with a swivel joint (55) and a suspension (59), which acts on the support (15) and the swing arm (53).

15. The transport module according to one of the preceding claims, **characterized in that** the wheel suspension (49) has a height adjustment for the at least one drive wheel (29).

16. The transport module according to one of the preceding claims, **characterized in that** at least one drive controller (85) and at least one energy storage device (87) are arranged on the support (15).

17. The transport module according to one of the preceding claims, **characterized in that** the transport module (11) together with at least one additional transport module (11) can be controlled as a transport unit or can be controlled independently of at least one additional transport module (11).

18. A transport system (13) for transporting an object (12), in particular in a production line of a technical facility, comprising a transport module (11) according to one of the preceding claims,
**characterized in that**
the transport system (13) has at least one additional transport module (11) or at least one non-powered load module (91), wherein each transport and load module (11, 91) can be directly connected with the object (12) and the modules have no mechanical connection between them.

19. The transport system according to claim 18, **characterized in that** the transport modules (11) of a transport system (13) can be controlled as a single unit.

## Revendications

1. Module de transport (11), destiné à transporter un objet (12), notamment dans une ligne de production d'une installation technique, comportant
- un support (15),
- une pluralité de galets directeurs (17), lesquels sont fixés sur le support (15), en étant chacun rotatif autour d'un premier axe rotatif (19) vertical et
- une unité d'entraînement (27), dotée d'au moins une roue d'entraînement (29) motorisée, laquelle est fixée sur le support (15),
**caractérisé**
- **en ce que** le module de transport (11) est susceptible d'être assemblé par un élément porteur (34) avec l'objet (12) à transporter, de telle sorte qu'il soit rotatif autour d'un deuxième axe rotatif (35) et
- **en ce que** l'au moins une roue d'entraînement (29), est fixée par une suspension de roue (49) sur le support (15), par la suspension de roue (49), la charge pouvant être répartie entre les galets directeurs (17) et la roue d'entraînement (29) et pouvant être transmise de jusqu'à 100% sur les galets directeurs (17).

2. Module de transport selon la revendication 1, **caractérisé en ce que** le module de transport (11) est prévu pour constituer avec au moins un module de transport supplémentaire ou un module de charge dépourvu d'un d'entraînement (11, 91) un système de transport (13) et pour pouvoir transporter l'objet (12), conjointement avec le module de transport supplémentaire ou le module de charge.

3. Module de transport selon la revendication 1 ou 2, **caractérisé en ce que** le module de transport (11) comporte trois galets directeurs (17).

4. Module de transport selon l'une quelconque des revendications précédentes, **caractérisé en ce que** les premiers axes de rotation (19) se situent sur une première ligne circulaire (37) du deuxième axe rotatif (35) .

5. Module de transport selon l'une quelconque des revendications précédentes, **caractérisé en ce que** le premier axe rotatif (19) vertical d'un galet directeur est écarté d'un premier axe de rotation (23) horizontal du galet directeur, en conséquence de quoi, un déport (25) est défini.

6. Module de transport selon l'une quelconque des revendications précédentes, **caractérisé en ce que** deux roues d'entraînement (29) sont prévues, lesquelles se situent sur un deuxième axe de rotation (47) horizontal commun et sur une deuxième ligne circulaire (45) du deuxième axe rotatif (35).

7. Module de transport selon la revendication 6, **caractérisé en ce que** le deuxième axe de rotation (47) recoupe le deuxième axe rotatif (35).

8. Module de transport selon l'une quelconque des revendications 6 ou 7, **caractérisé en ce que** la première ligne circulaire (37) présente un premier rayon, lequel est inférieur au deuxième rayon de la deuxième ligne circulaire (45).

9. Module de transport selon l'une quelconque des revendications précédentes, **caractérisé en ce que** le module de transport (11) comporte au moins un patin de frein (63) réglable en hauteur, lequel peut se presser sur le fond inférieur (64).

10. Module de transport selon l'une quelconque des revendications précédentes, **caractérisé en ce que** l'élément porteur (34) comporte un palier (73) sphérique.

11. Module de transport selon l'une quelconque des revendications précédentes, **caractérisé en ce que** sur la face supérieure de l'élément porteur (34) est positionné un élément d'assemblage (33).

12. Module de transport selon la revendication 11, **caractérisé en ce que** l'élément d'assemblage est un boulon (33), qui présente une section transversale non symétrique en rotation.

13. Module de transport selon l'une quelconque des revendications 5 à 12, **caractérisé en ce que** le déport (25) est plus court que l'écart (83) entre le premier axe rotatif (19) et le deuxième axe de rotation (47).

14. Module de transport selon l'une quelconque des revendications précédentes, **caractérisé en ce que** la suspension de roue (49) est réalisée par un bras oscillant (53) doté d'une articulation rotative (55) et un amortisseur (59), lequel s'engage sur le support (15) et sur le bras oscillant (53).

15. Module de transport selon l'une quelconque des revendications précédentes, **caractérisé en ce que** la suspension de roue (49) comporte un réglage en hauteur de l'au moins une roue d'entraînement (29).

16. Module de transport selon l'une quelconque des revendications précédentes, **caractérisé en ce que** sur le support (15) sont placés au moins un régulateur d'entraînement (85) et au moins un accumulateur d'énergie (87).

17. Module de transport selon l'une quelconque des revendications précédentes, **caractérisé en ce que** le module de transport (11) est susceptible d'être commandé, conjointement avec au moins un module de transport (11) supplémentaire en tant qu'une unité de transport ou est susceptible d'être commandé, indépendamment d'au moins un module de transport (11) supplémentaire.

18. Système de transport (13), destiné à transporter un objet (12), notamment dans une ligne de production d'une installation technique, comprenant un module de transport (11) selon l'une quelconque des revendications précédentes,
**caractérisé**
**en ce que** le système de transport (13) comporte au moins un module de transport (11) supplémentaire ou au moins un module de charge (91) dépourvu d'entraînement, chaque module de transport ou de charge (11, 91) étant susceptible d'être assemblé directement avec l'objet (12) et les modules étant exempts d'un assemblage mécanique mutuel.

19. Système de transport selon la revendication 18, **caractérisé en ce que** les modules de transport (11) d'un système de transports (13) sont susceptibles d'être commandés sous la forme d'une unité commune.
